# EUROPEAN PATENT SPECIFICATION

(11) **EP 2 894 455 B1**
(45) Date of publication and mention of the grant of the patent: **19.04.2017**
(21) Application number: 13834960.0
(22) Date of filing: 27.08.2013
(51) Int. Cl.: G01N 1/04, G01N 1/08, G01N 23/223, G01N 23/227

(54) **SAMPLING TOOL, QUANTITATIVE ANALYSIS METHOD, AND ANALYSIS SYSTEM**
VORRICHTUNG ZUR PROBEENTNAHME, VERFAHREN ZUR QUANTITATIVEN ANALYSE UND ANALYSESYSTEM
OUTIL D'ÉCHANTILLONNAGE, PROCÉDÉ D'ANALYSE QUANTITATIVE ET SYSTÈME D'ANALYSE

(30) Priority: 04.09.2012 JP 2012194030
(43) Date of publication of application: 15.07.2015
(73) Proprietor: FUJITSU LIMITED, Kawasaki-shi Kanagawa 211-8588 (JP)
(72) Inventor: NOGUCHI, Michiko, Kawasaki-shi, Kanagawa 211-8588 (JP); OZAKI, Mitsuo, Kawasaki-shi, Kanagawa 211-8588 (JP); HAYASHI, Nobuyuki, Kawasaki-shi, Kanagawa 211-8588 (JP)
(74) Representative: Fenlon, Christine Lesley
(86) International application number: PCT/JP2013/072917
(87) International publication number: WO 2014/038437

(56) References cited:
- JP-A- H05 164 710
- JP-A- 2001 047 340
- JP-A- 2003 344 233
- JP-A- 2006 064 475
- JP-A- 2011 002 316
- JP-A- 2011 079 063
- NIETERING K E ET AL: "Determination of fluoride and tin in fluoride-doped tin oxide films on glass", ANALYTICA CHIMICA ACTA, ELSEVIER, AMSTERDAM, NL, vol. 186, 1 January 1986 (1986-01-01), pages 279-282, XP026595106, ISSN: 0003-2670, DOI: 10.1016/S0003-2670(00)81797-3 [retrieved on 1986-01-01]

## Description

### TECHNICAL FIELD

The present invention relates to a sampling tool, and a quantitative analysis method and an analysis system that use the same.

### BACKGROUND ART

Environment-related laws and regulations such as the European RoHS directive (restriction of the use of certain hazardous substances in electrical and electronic equipment) have been enforced in recent years. The RoHS directive regulates an amount of a hazardous substance contained in a uniform material that composes a component of an electronic or electric product to be placed in the European market. Specifically, lead, mercury, hexavalent chromium, and particular bromine-containing fire retardant materials (PBB: poly(biphenyl bromide) and PBDE: poly(brominated diphenyl ether)) are regulated to be less than or equal to 0.1 wt% (1000 ppm) and cadmium is regulated to be less than or equal to 100 ppm. For complying with the RoHS directive, developments of a precision analysis method and a screening analysis method (simple analysis method) have been advanced for a substance to be regulated.

For lead, mercury, cadmium, and particular bromine-containing fire retardant materials, a precision analysis method and a screening analysis method that uses fluorescent x-rays have been established. Hexavalent chromium Cr(VI) is more likely to be contained in a chemical conversion coating that is applied to a surface of a metal member (such as a screw) that is used for an electronic instrument, for the purpose of preservation, decoration, or the like. Analysis of hexavalent chromium is usually executed by procedures of a pretreatment that extracts (elutes) hexavalent chromium from a material and a quantitative analysis of an extracted hexavalent chromium (see, for example, Patent Document 1).

However, there is a problem in that it is not possible to quantify a concentration by weight of a contained substance because it is not possible to obtain a rate of extraction of a weight of a coating itself in an extraction method.

On the other hand, a method for scraping off a coating part to be analyzed onto a polished sheet or a polished film (see, for example, Patent Document 2 or 3) and a method for rubbing a sample surface with a file with a concavo-convex surface provided by metal vapor deposition to cause a sample to adhere to a recess of the file (see, for example, Patent Document 4) have been known as methods for sampling a coating.

However, there is a problem in a publicly-known scraping-off method in that it is difficult to control a depth of scraping off and an underlying member is also scraped off.

### PRIOR ART DOCUMENTS

### PATENT DOCUMENTS

Patent Document 1: Japanese Laid-Open Patent Application No. 2006-064475
Patent Document 2: Japanese Patent No. 4946652 (Japanese Laid-Open Patent Application No. 2008-309730)
Patent Document 3: Japanese Laid-Open Patent Application No. 2011-144943
Patent Document 4: Japanese Laid-Open Patent Application No. 2000-338013
Patent Document 4: Japanese Laid-Open Patent Application No. 2003-344233
   This sampling tool is provided with a tool main body 4 of a stepped pedestal shape having a large diameter part 5 and a small diameter part 6, abrasive paper 7 bonded to a tip face 6a of the small diameter part 6 bulged sphere-likely or likely thereto, and pressed onto the film 2 while rotated together with the tool main body 4 so as to make the film 2 rubbed as the sample, and a ring-like member 8 attached freely detachably onto an outer circumference of the small diameter part 6. The tool serves as a sample holder for the fluorescent X-ray analysis of the sample 2a under the condition where the sample 2a is rubbed and where the ring-like member 8 is engaged.
Patent Document 5: Japanese Laid-Open Patent Application No. 2011-079063

The polishing tool has a leading edge 21 convexly curved with a first radius of curvature R1 along a first direction T and including a leading end surface 21a convexly curved with a second radius of curvature R2 along a second direction S orthogonal to the first direction T. The object to be polished is polished using the polishing tool having the leading end surface 21a curved in both directions T and S, and the polished material is sampled.

### PROBLEMS TO BE SOLVED BY THE INVENTION

An object is to provide a configuration and a technique for separating a coating on a substrate from an underlying member so that a quantitative analysis of a coating component is possible.

### SUMMARY OF THE INVENTION

The invention is defined in the independent claims, to which reference should now be made. Advantageous embodiments are set out in the sub claims.

### EFFECTS OF THE INVENTION

It is possible to separate a coating from an underlying member and quantitatively analyze a component of the coating.

### BRIEF DESCRIPTION OF THE DRAWINGS

FIG. 1 is a diagram that illustrates a configuration example of a sample as a target for a quantitative analysis.
FIG. 2 is a schematic diagram that illustrates sampling of a coating by using a sampling tool in an embodiment.
FIG. 3 is a diagram that illustrates surface roughness of a sampling surface in an embodiment.
FIG. 4 is a diagram that illustrates a relationship between a radius of curvature of a sampling surface and a sampling amount.
FIG. 5 is a diagram that illustrates a relationship between surface roughness and a sampling amount.
FIG. 6(A) is a diagram that illustrates a relationship between a radius of curvature of a sampling surface with a different surface roughness and a sampling amount and FIG. 6(B) is a diagram that illustrates a relationship between surface roughness at a different radius of curvature and a sampling amount.
FIG. 7 is a diagram that illustrates desirable ranges of a radius of curvature and surface roughness for sampling.
FIG. 8 is a diagram that illustrates an example of a recess that is formed on a sampling surface.
FIG. 9 is a diagram that illustrates a state of a sampling surface in a case where a sample coating is sampled by a sampling tool in an embodiment, wherein FIG. 9(A) is an optical microscope image of an entire sampling surface, FIG. 9(B) is. an SEM image of a sampling surface, FIG. 9(C) is a cross-sectional SEM image (at a site where a coating is not attached), and FIG. 9(D) is a cross-sectional SEM image (at a site where a sampled coating is attached).
FIG. 10 is a diagram that illustrates a state of peeling of a film to be sampled from an underlying member, where FIG. 10(A) is a schematic diagram of a state of peeling and FIG. 10(B) is a cross-sectional TEM image.
FIG. 11 is a diagram (an XPS spectrum) for confirming and providing evidence that it is possible to separate a coating by a sampling tool in an embodiment without incorporating an underlying member component.
FIG. 12 is a diagram (an XRD diffraction pattern) for confirming and providing evidence that it is possible to separate a coating by a sampling jig in an embodiment without incorporating an underlying member component.
FIG. 13 is a diagram that illustrates materials of a sampling tool and a characteristic thereof.
FIG. 14 is a flowchart of a quantitative analysis method that uses a sampling tool in an embodiment.
FIG. 15 is a diagram that illustrates an example of a quantitative analysis in FIG. 14 and calculation of a concentration by weight.
FIG. 16 is a diagram that illustrates a quantitative result of the quantitative analysis method in FIG. 14.
FIG. 17 is a diagram that illustrates a relationship between a film thickness of a coating and a sampling amount.
FIG. 18 is a diagram that illustrates a relationship between a concentration of Cr and an intensity of radiation rays used for quantitation of Cr.
FIG. 19 is a diagram that illustrates a configuration example of a sampling tool.
FIG. 20 is a diagram that illustrates another configuration example of a sampling tool.

### EMBODIMENTS FOR IMPLEMENTING THE INVENTION

An embodiment of the invention will be described below, with reference to the drawings. An embodiment provides a sampling tool in such a manner that it is possible to separate a coating as a target for analysis from a sample substrate effectively, and a quantification method and an analysis system that uses the same.

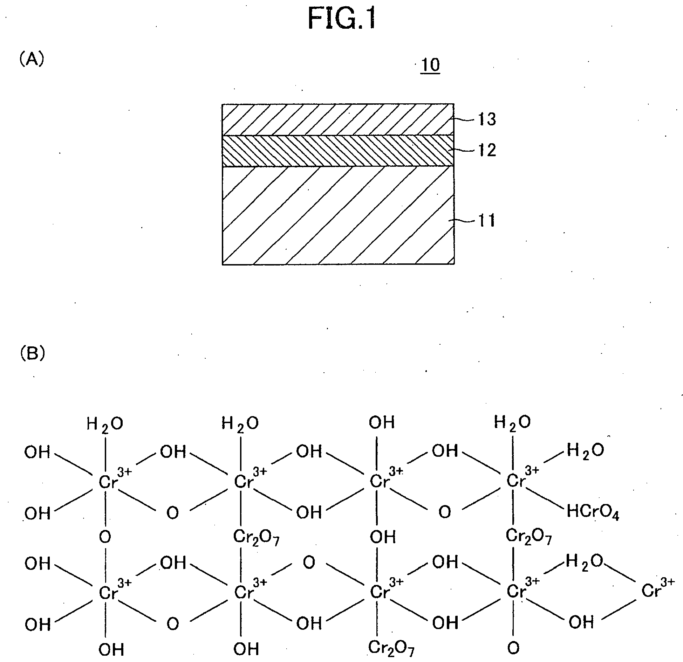

FIG. 1 is a cross-sectional diagram of a sample 10 with a chemical conversion coating 13 as a target for quantitative analysis formed thereon and a diagram that illustrates a chemical configuration example of the chemical conversion coating 13. The chemical conversion coating 13 is formed on a metal substrate 11 via a plating film 12. This chemical conversion coating 13 is a target for quantitative analysis.

The chemical conversion coating 13 is a chromate film 13 that is formed for the purpose of, for example, preservation or decoration. A chromate film is a composite hydrated oxide coating that is based on trivalent chromium (Cr³⁺) and hexavalent chromium (Cr₂O₇ or HCrO₄), as schematically illustrated in FIG. 1(B). A part coated by a chromate film contains hexavalent chromium, and hence, is a regulation target under the EU-RoHS directive.

In a case where hexavalent chromium in the chemical conversion coating 13 is analyzed by a conventional chemical analysis method, the chemical conversion coating 13 is treated together with a substrate (the metal substrate 11 and the plating film 12). For example, a quantification value is obtained by dipping an entire sample 10 into an elution fluid and measuring an amount of eluted Cr(VI) per a unit surface area. In this method, it is not possible to quantify a concentration by weight (ppm, wt%, or the like) that is a regulation unit under the RoHS directive. That is because the weight of a chemical conversion coating is not obtained and hence it is also not possible to calculate a weight ratio of Cr contained therein. Furthermore, a component of the plating film 12 or the metal substrate 11 may also be eluted together with a component of the chemical conversion coating 13, and it is not possible to ensure an accuracy of measurement.

In order to obtain a concentration by weight of a substance in a solid, it is necessary to acquire a weight of a sample that is a basis of calculation of a concentration by weight (a denominator). In a case where a coating formed on a substrate is analyzed, a method that samples only a coating effectively is desired so as not to incorporate a substance other than the coating.

### <Sampling of a coating>

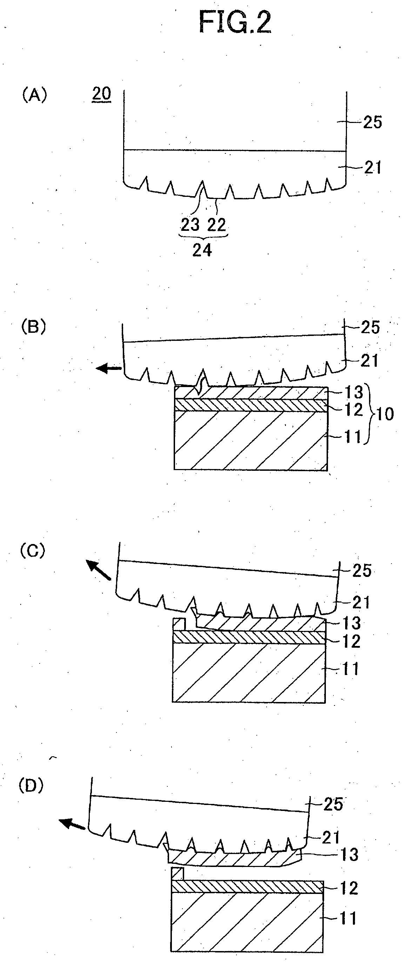

FIG. 2 is a schematic diagram that illustrates a technique for sampling the coating 13 from the sample 10 by using a sampling tool 20 in an embodiment. FIG. 2(A) is a side view of the sampling jig 20 and FIG. 2(B) - FIG. 2(D) illustrate a sampling procedure.

The sampling tool 20 has a sampler 21 and a holder 25 that holds the sampler 21. The holder 25 is provided to facilitate handling thereof but is not an essential component. A shape of the holder 25 is not limited to a cylinder (stick) shape as illustrated in the figure and it is possible to provide an arbitrary shape such as a taper shape or a flange shape.

The sampler 21 is formed of a material with a high chemical resistance and a hardness higher than that of a coating that is a target for analysis, and has a sampling surface 24 as a convex curved surface with a predetermined curvature. The sampling surface 24 includes a contact surface 22 that contacts a sample to hold a sampled coating and a fine recess 23 formed in a direction of a depth from the contact surface 22. A surface area of the contact surface 22 is greater than a surface area of the recess so as to have a strong adhesion property to a coating.

A curvature of a convex shape of the sampling surface 24 is appropriately set in a range of SR 5 - SR 500 [mm]. Herein, SR is a radius of a spherical surface defined in JIS Z 8317, pp. 12. It is desirable to be curved at a certain level of curvature in order to separate the chemical conversion coating 13 from the sample 10 efficiently. However, it is desirable for a sampling surface to be as flat as possible in a case where a coating adhering to the sampling surface 24 is directly subjected to radiation exposure analysis such as X-ray fluorescence (XRF) analysis. Therefore, it is possible to peel a coating (for example, the chemical conversion coating 13) from the sample 10 efficiently and a range as described above is suitable as a range capable of a radiation exposure analysis.

As described below, an amount that is capable of being sampled by the sampler 21 also relates to a depth (surface roughness) of the recess 23 formed on the sampling surface 24 and a distribution thereof. In a practical example, a curvature of a sampling surface is SR 5 - SR 300, preferably SR 5 - SR 50. Furthermore, in a case where a sampling surface is measured to weigh a sampling weigh or a total amount of chromium is quantified, or the like, it is desirable for a surface area of the sampling surface 24 to be less than or equal to a surface area of a measurement area of an analyzing device to be used.

As an example, the sampler in FIG. 2(A) is a quartz glass with a diameter of 5 mm and the curvature of the sampling surface 24 is SR 35. In this case, the sampling surface 24 has a curved surface with a radius of 35 mm.

In a case where sampling is executed by using the sampling jig 20, the sampler 21 is pressed against a surface of the sample 10 as illustrated in FIG. 2(B). Because the sampling surface 24 is convex at a predetermined curvature, the chemical conversion coating 13 engages an edge of a boundary between the contact surface 22 and the recess 23.

As illustrated in FIG. 2(C), a predetermined area of the surface of the sample 10 is scanned by the sampler 21 while the sampling surface 24 of the sampler 21 is pressed against a surface of the chemical conversion coating 13. Due to this movement, the coating 13 peels off near an interface with the plating film 12 as an underlying member.

Subsequently, as the sampler 21 is lifted up from the sample 10 as illustrated in FIG. 2(D), the chemical conversion coating 13 is separated from the plating film 12 on a condition that it adheres to the contact surface 22 of the sampler 21. For example, in a case where the sample 10 is a preserved screw, a zinc plating 12 is applied to an iron substrate 11 and a chromate film 13 is formed on the zinc plating 12. A film thickness of the chromate film 13 is 1 - several µm. It is possible to separate only the chromate film 13 over a sufficient area by contacting the sampling surface 24 of the sampling jig 20 in FIG. 2 with a head of a screw, applying a weight of about 300 g to the sampling jig 20, and scanning the head of the screw uniformly.

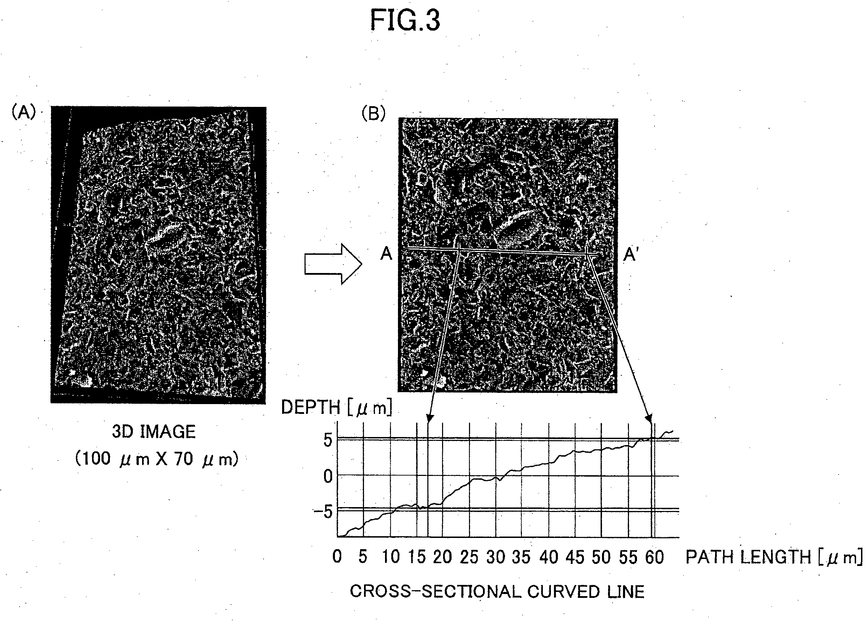

FIG. 3 is a diagram that illustrates a surface roughness of the sampling surface 24 of the' sampler 21. A "surface roughness" referred to herein refers to an average height of a roughness curve (a height between a peak and a valley) in a profile curve acquired from a 3D-SEM (3-dimesnional Scanning Electron Microscopy) image (see JIS B0601, JIS B0651). FIG. 3(A) is a 3D-SEM image of the sampler 21 in an embodiment and FIG. 3(B) is a profile curve obtained from such a 3D-SEM image. In FIG. 3(B), a longitudinal axis is a seismic intensity [µm] and a transverse axis is a path length [µm]. In an embodiment, profile curves are acquired at a plurality of sites on a sampling surface and a numerical value obtained from an average value for representative two sites is used as a "surface roughness" of the sampling surface 24.

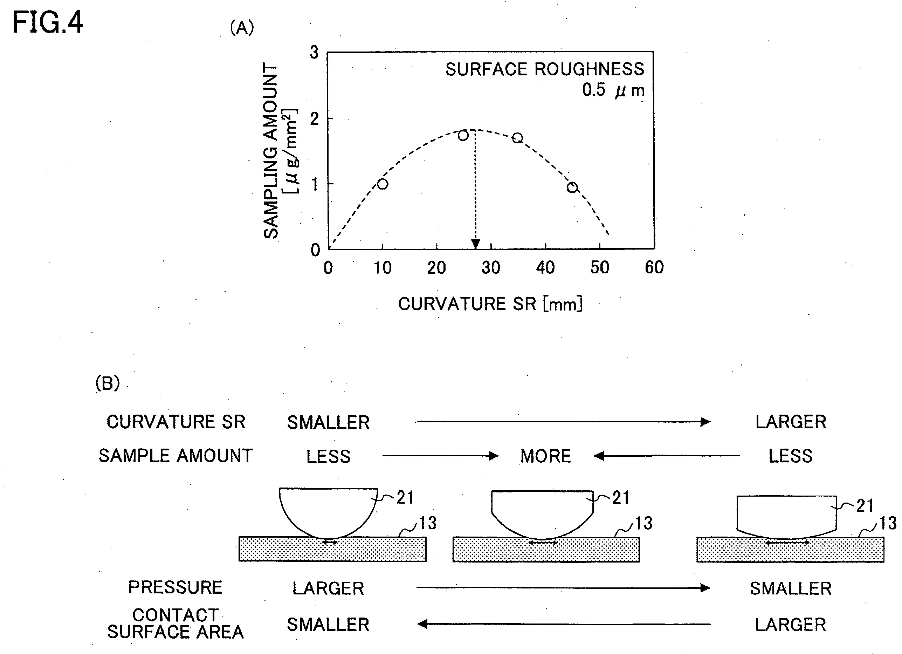

FIG. 4 is a diagram that illustrates a relationship between a curvature of the sampling surface 24 with a surface roughness of 0.5 µm and a sampling amount. In FIG. 4(A), a transverse axis of a graph represents a curvature (SR) of the sampling surface 24 and a longitudinal axis represents a sampling amount per a unit surface area.

In FIG. 4(A), a sampling amount is a maximum in a case where a curvature (SR) is a certain value, and decreases as it is greater or less than the same. As illustrated in FIG. 4(B), this is because, as a curvature SR of a sampling surface is small, a curve is strong, wherein pressure against a sampled film 13 is large but a contact surface area is small so that a sampling amount is little. On the other hand, as a curvature SR is large, a curve is gentle, wherein a contact surface area is large but a pressure is small so that a sampling amount is little. From this matter, it is possible to understand that a curvature or a radius of curvature is present such that a pressure against and a contact surface area for the sampled film 13 are optimum.

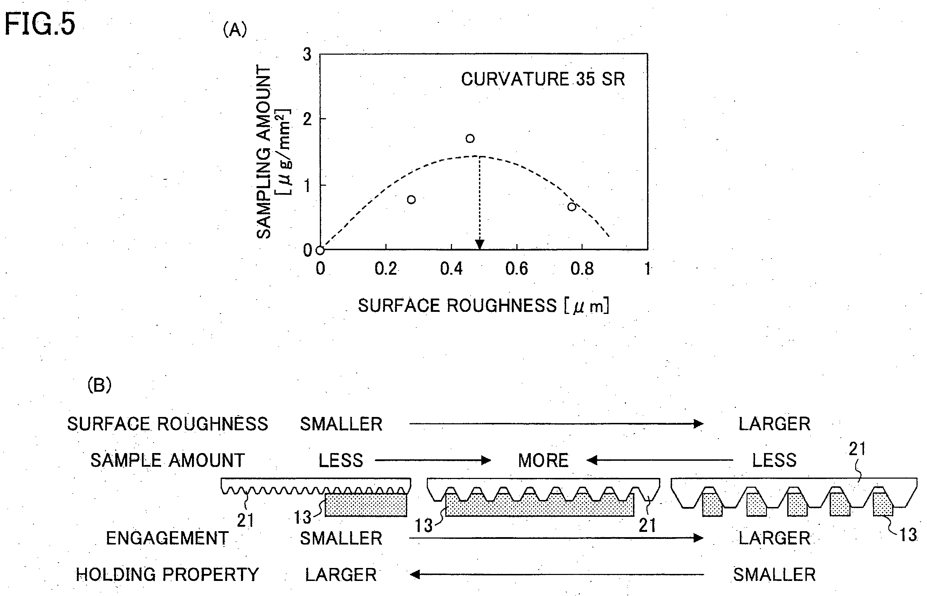

FIG. 5 is a diagram that illustrates a relationship between a surface roughness of the sampling surface 24 with SR of 35 [mm] and a sampling amount. In FIG. 5(A), a transverse axis of a graph represents surface roughness of a sampling surface and a longitudinal axis represents a sampling amount per unit surface area.

In FIG. 5(A), a sampling amount is a maximum in a case where surface roughness is a certain value and decreases as it is greater or less than the same. As illustrated in FIG. 5(B), this is because, as surface roughness is small, a contact surface area for the sampled film 13 increases to improve a holding property, but engagement is weak so that a sampling amount is little. On the other hand, as surface roughness is large, engagement is strong, but a contact surface area for the sampled film 13 is small so as to degrade a holding property. From this matter, it is possible to understand that surface roughness is present such that engagement with and a holding property for the sampled film 13 are optimum.

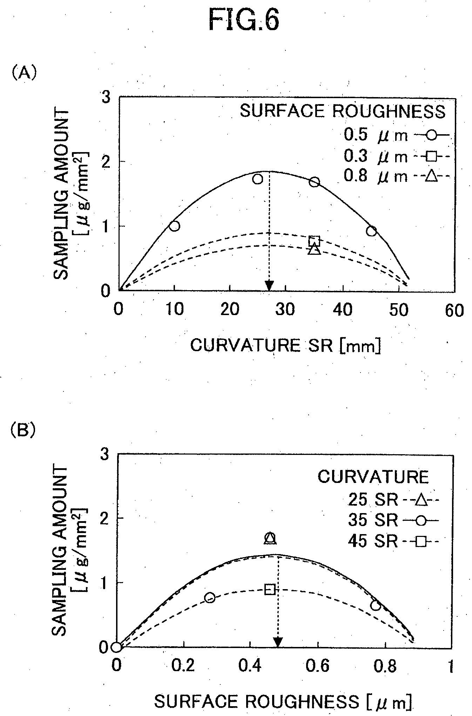

FIG. 6(A) illustrates a sampling amount as a function of a curvature (SR) at a variety of surface roughnesses and FIG. 6(B) illustrates a sampling amount as a function of a surface roughness at a variety of curvatures (SR).

A tendency in FIG. 4, that is, a tendency of a sampling amount being maximum at a curvature (SR) where pressure against and a contact surface area for the sampled film 13 are optimum applies regardless of large or small surface roughness. An aspect of a change of a sampling amount as a function of a curvature does not change even when a value of surface roughness is changed. Therefore, a sampling amount is measured at a certain curvature and a certain surface roughness so that it is possible to interpolate a change of a sampling amount at such a surface roughness.

In FIG. 6(A), changes of a sampling amount at surface roughnesses of 0.3 µm and 0.8 µm are interpolated based on a change of a sampling amount as a function of a curvature (SR) at a surface roughness of 0.5 µm.

Similarly, a tendency in FIG. 5, that is, a tendency of a sampling amount being maximum at a surface roughness where engagement with and a holding property for the sampled film 13 are optimum applies regardless of a large or small curvature of the sampling surface 24. An aspect of a change of a sampling amount as a function of surface roughness does not change even when a value of curvature or radius of curvature is changed. Therefore, a sampling amount is measured at a certain surface roughness and a certain curvature or radius of curvature so that it is possible to interpolate a change of a sampling amount at such a curvature or radius of curvature.

In FIG. 6(B), changes of a sampling amount at curvatures of SR 25 and SR 45 are interpolated based on a change of a sampling amount as a function of surface roughness at a curvature of SR 35.

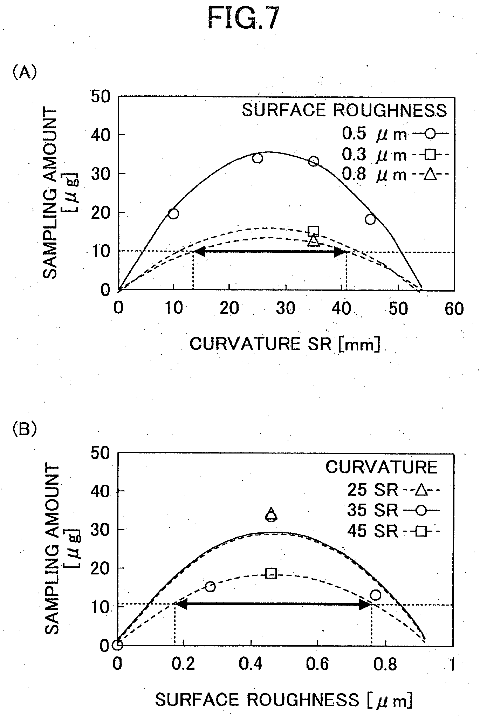

FIG. 7(A) is a diagram that illustrates a good range of curvature of the sampler 21 and FIG. 7(B) is a diagram that illustrates a good range of surface roughness of the sampler 21. The sampler 21 used herein is such that a diameter is 5 mm and a surface area of the sampling surface 24 is 20 mm². A reason why a diameter of the sampler 21 is 5 mm is that an XRF device with a radiation exposure area (namely, an X-ray fluorescence analysis area) that is an elliptical shape of 4.5 mm x 6.0 mm is used for measuring a surface of a sampling surface by X-ray fluorescence (XRF) to obtain a sampling weight and a total amount of chromium and hence the sampling surface 24 falls within such a radiation exposure elliptical area. It is possible to determine a diameter of the sampler 21 appropriately depending on a radiation area for a used measurement device.

A shape of a sampling surface (optimum ranges of curvature and surface roughness) is considered that is necessary for a case where a sampled chromate coating is dissolved in an alkaline fluid of EPA3060A (95 °C / 60 minutes), subsequently provided as a solution thereof, and quantitatively analyzed by a colorimetric method under SPA7196A to measure a concentration of hexavalent chromium in the coating. A commonly-used chromate film contains about 4 wt% of hexavalent chromium. An amount of sample being greater than or equal to 10 µg is usually needed in order to detect hexavalent chromium in such a chromate film.

In FIG. 7(A), a range of curvature where it is possible to sample 10 µg or more of a chromate film is SR 5 - SR 50 in a case where the sampler 21 with a surface roughness of 0.5 µm is used. A range of curvature where it is possible to sample 10 µg of a chromate film at a certain level regardless of a large or small surface roughness is SR 12 - SR 41.

In FIG. 7(B), a range of surface roughness where it is possible to sample 10 µg or more of a chromate film is 0.1 - 0.85 µm in a case where the sampler 21 with a curvature of SR 35 is used. A range of surface roughness where it is possible to sample 10 µg of a chromate film at a certain level regardless of a large or small curvature is 0.17 µm - 0.77 µm.

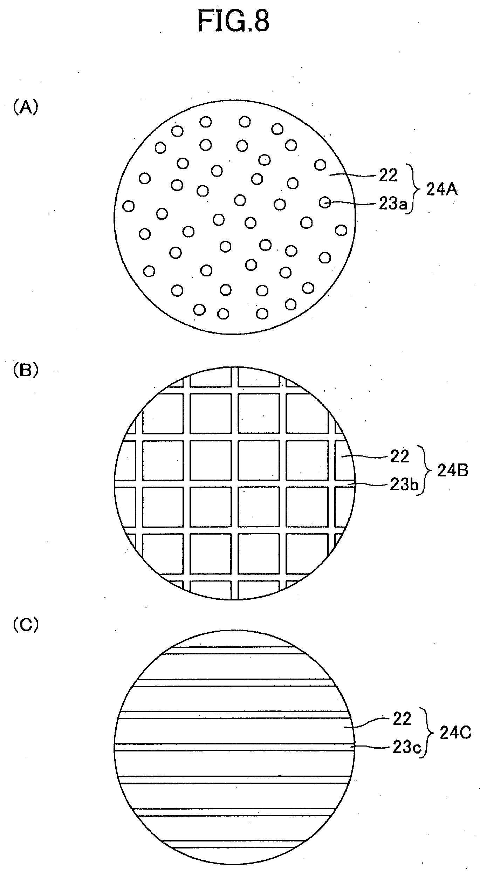

FIG. 8 illustrates a configuration example of the sampling surface 24. A sampling surface 24A in FIG. 8(A) has dents 23a formed at random. A cross-sectional shape of the dent 23a is arbitrary and may be a U-shape, a V-shape, or a hemispherical shape. In a case where the sampler 21 with a diameter of 5 mm and a curvature of SR 35 is used, a surface is roughened by an abrasive grain with a grain size of #600 in such a manner that a surface area of the contact surface 22 is greater than a surface area of the dents 23a, and thereby, it is possible to provide a surface roughness of 0.1 - 0.85 µm.

Because it is sufficient for the sampling surface 24A to be roughened so as to have an edge that engages a surface of the chemical conversion coating 13 of the sample 10, a configuration in FIG. 8(B) or FIG. 8(C) may be employed in replacement of the dents 23a provided by an abrasive grain.

A sampling surface 24B in FIG. 8(B) has fine grooves 23b with a grid shape. A cross-sectional shape of a groove is arbitrary and may be a U-shape, a V-shape, or a hemispherical shape. In this case, a width or space of the fine groove 23b is also selected suitably in such a manner that a surface area of the contact surface 22 is greater than a surface area of the fine grooves 23b. A depth of the groove 23b is 0.1 - 0.85 µm.

A sampling surface 24C in FIG. 8(C) has fine grooves 23c with a stripe shape. A cross-sectional shape of the fine groove 23c is similar to a case of FIG. 8(B) and a surface area or the contact surface 22 is greater than a surface area of the fine grooves 23c. The recess 23 of the sampling surface 24 is not limited to these examples. Because it is sufficient to form an edge that engages the chemical conversion coating 13 as a target, it is possible to form an arbitrary groove portion such as a wave pattern, a mesh pattern, or a polygonal pattern by laser processing or the like. Furthermore, a surface may be roughened by using an abrasive grain with a size dependent on purpose.

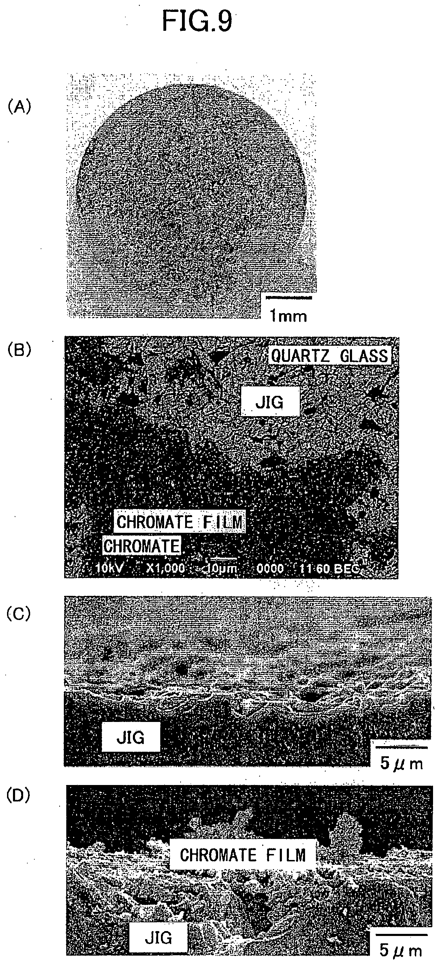

FIG. 9 illustrates a sampling state where the sampling jig 20 in an embodiment is used. FIG. 9(A) is an optical micrograph of the sampling surface 24 of the sampler 21 immediately after the chromate film 13 is sampled. The chromate film 13 is attached to the sampling surface 24 all over and is centered at a vertex thereof. This indicates that it is possible to separate a certain amount of the chromate film 13 from the sample 10 stably.

FIG. 9(B) is an SEM image of the sampling surface 24 with the chromate film 13 attached thereto. A flat and smooth surface of the chromate film 13 is observed that is attached to a sampling surface. It is found that the chromate film 13 is fairly peeled off from a substrate (that includes the metal substrate 11 and the plating film 12) by using the sampling jig 20 in an embodiment.

FIG. 9(C) is a cross-sectional SEM image of the sampler 21 before sampling and FIG. 9(D) is a cross-sectional SEM image of the sampler 21 after sampling. From FIG. 9(C), it is found that fine recesses are formed on a surface of the sampler 21. In FIG. 9(D), a state is observed such that a chemical conversion coating (chromate film) is attached to the sampling surface 24 of the sampler 21 while keeping a film shape thereof.

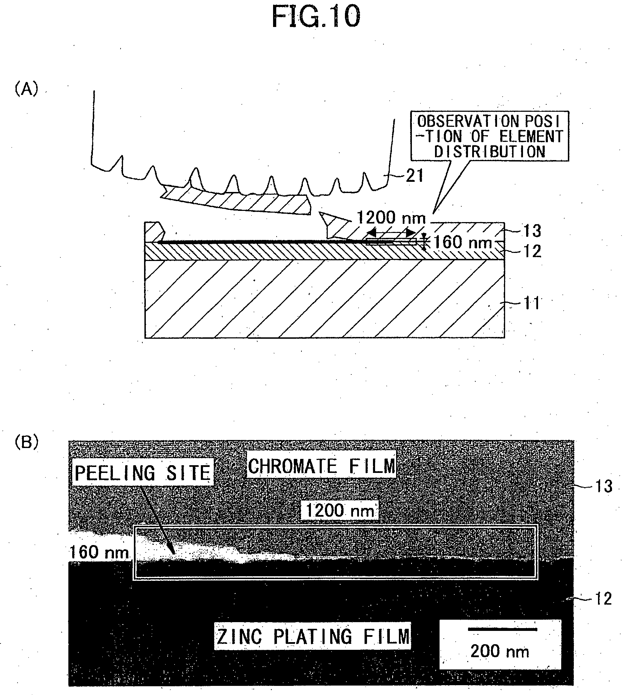

FIG. 10 is a diagram that illustrates confirmation of a location of peeling off (a location of an element distribution observation) by STEM (Scanning Transmission Electron Microscopy) element mapping. As illustrated in FIG. 10(A), a part of the chromate film 13 formed on the zinc plating film 12 on the iron (Fe) substrate 11 is peeled off by the sampler 21. After peeling off, an element distribution of Cr, Zn, or Fe is observed at a location of peeling off.

From FIG. 10(B), it is found that the chromate film 13 is peeled off at an interface of the zinc plating film 12.

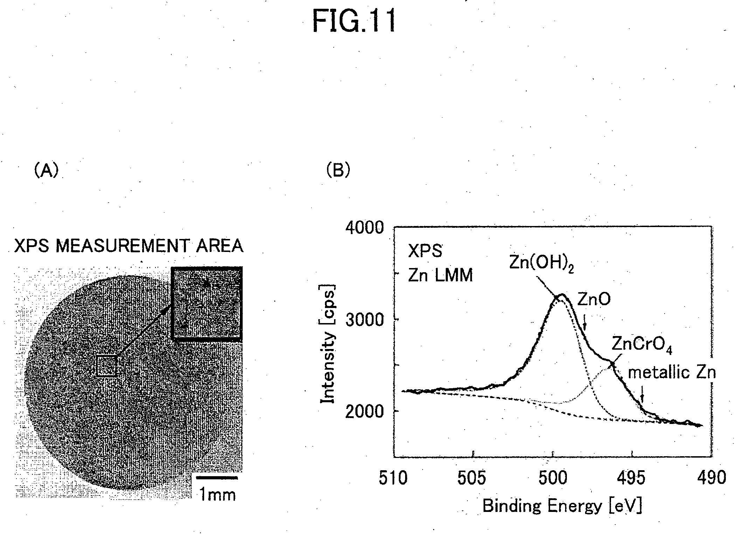

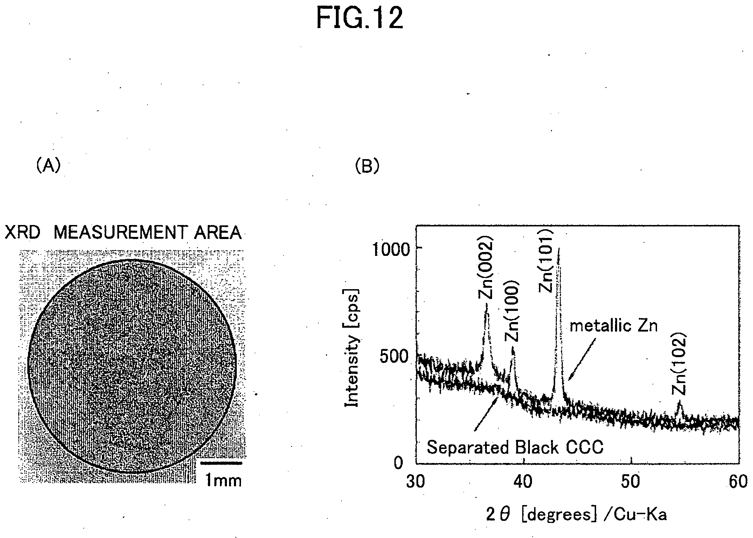

FIG. 11 and FIG. 12 are diagrams for confirming and providing evidence that the chromate film 13 sampled by the sampling tool 20 in an embodiment does not contain a component of the underlying plating film 12, that is, is separated from an interface of the zinc plating film 12. FIG. 11(A) is a diagram that illustrates an X-ray photoelectron spectroscopy (XPS) measurement area of the sampled chromate film 13 and FIG. 11(B) is a diagram that illustrates a Zn LMM peak in an XPS spectrum.

If the underlying zinc (Zn) plating film 12 were scraped off by using the sampling tool 20 in an embodiment, a peak of Zn should appear in an XPS spectrum. A peak of metallic zinc (Zn) should appear at 494.4 eV and a peak of zinc oxide (ZnO) should appear at 497.6 eV. However, a peak of Zn or ZnO is not produced as is clear from a spectrum in FIG. 11(B).

On the other hand, a peak of Zn(OH)₂ produced in the chromate film 13 in a process for forming the chromate film 13 on the zinc plating film 12 appears at 499.4 eV as a main peak. Similarly, ZnCrO₄ produced in a process for formation of the chromate film 13 appears at 496.4 eV as a shoulder (shoulders) in a spectrum thereof. From this spectroscopic result, it is found that only the chromate film 13 as a target is sampled and the underlying plating film 12 or the metal substrate 11 is not sampled.

FIG. 12(A) is a diagram that illustrates an X-ray diffraction (XRD) area of the sampled chromate film 13 and FIG. 12(B) is a diagram that illustrates an XRD pattern of the sampled chromate film 13 as compared with an XRD pattern of metallic zinc. A whole of the sampling surface 24 of the sampling tool 20 is a target area for XRD.

If a sampled film were contaminated with a component of the underlying plating film 12, peaks of plane orientations (002), (100), (101), and (102) of metallic zinc should appear at 2θ = 36.3°, 39.0°, 43.2°, and 54.3°, respectively, as illustrated in an upper comparative pattern in FIG. 12(B). However, a diffraction peak of zinc does not appear with respect to a separation film (CCC film: Chemical Conversion Coating film) as is clear from a lower diffraction pattern in FIG. 12(B).

From results of the XPS analysis in FIG. 11 and the XRD analysis in FIG. 12, it is found that the sampled chemical conversion film (chromate film) 13 does not contain a component of the underlying plating film 12. Any of detected Zn compounds (Zn(OH)₂ and ZnCrO₄) is a component of the chemical conversion coating (chromate film) 13 as a target. It is found that the chemical conversion coating 13 is effectively separated from the underlying plating film 12 and analyzed by using the sampling tool 20.

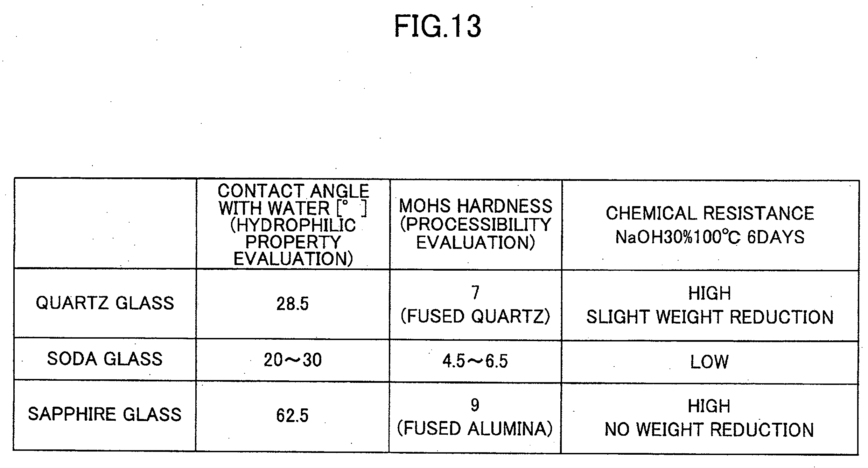

FIG. 13 is a diagram that illustrates a material selection standard for the sampler 21 of the sampling tool 20. It is desirable for the sampler 21 to be of a material with a hardness higher than that of the chemical conversion coating 13 in order to separate the chemical conversion coating 13 as a target from an underlying member (such as a plating layer 12) effectively. Furthermore, it is desirable to be a material with a chemical resistance such that it is possible to resist an acid or a base sufficiently. Moreover, it is desirable to be a material with a high hydrophilic property and adhesion property such that it is possible to attach to and stably hold onto the contact surface 22, the chemical conversion coating 13 as a target. That is because the chemical conversion coating 13 usually contains moisture and hence it is possible to hold the separated chemical conversion coating 13 stably by using a material with a high hydrophilic property.

Although it is desirable to use a quartz glass or a sapphire glass from these viewpoints, a material of the sampler 21 is not limited to such an example and it is possible to use an arbitrary glass with a chemical resistance such as a borosilicate glass. In a case where quartz glass is used, a treatment for improving a hydrophilic property may be applied to a surface. For a surface modification process for improving a hydrophilic property, there is provided a chemical treatment such as acid washing, excimer laser irradiation, or the like. Due to these processes, an OH group is introduced onto a surface of the sampler 21 to improve a hydrophilic property thereof. For another example of a surface modification process, a surface may be coated with a stable material that has a superhydrophilic function, such as a TiO₂-based photocatalyst. For a surface modification process for improving an adhesion property of the sampler 21, it is considered that a surface area is increased by a scientific or physical process.

### <A quantitative analysis method>

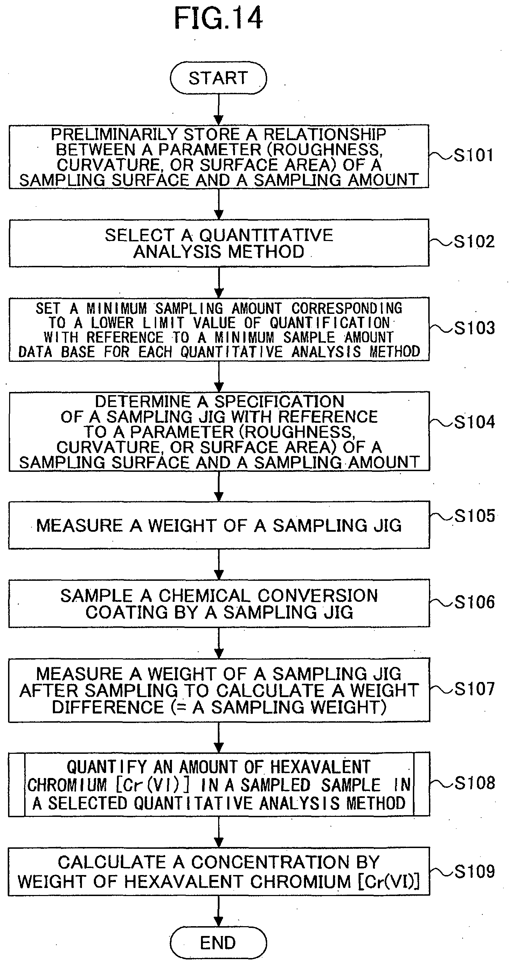

FIG. 14 is a flowchart of a quantitative analysis method that uses the sampling tool 20 in an embodiment.

At S101, a plurality of kinds of sampling tool or samplers 21 that have different parameters are preliminarily prepared, and a sampling amount is caused to correspond to parameters such as curvature, surface roughness, a surface area of a sampling surface, and hardness of a sampler for each sampling tool 20 or each sampler 21. A relationship of correspondence may be stored in a sampler data base. A sampling amount that is capable of being sampled by one-time sampling is different depending on a parameter such as curvature, surface roughness, or a surface area of a sampling surface, of the sampler 21. Furthermore, a height necessary for a sampler is also different depending on a kind of coating. Because a shape, a size, a surface condition, and hardness of the sampler 21 and the like are present that are suitable for obtaining a desired sampling amount of a desired coating, these parameters are preliminarily caused to correspond to a sampling amount, and thereby, it is possible to select an optimum sampler 21.

At step S102, a quantitative analysis method is selected. A minimum sampling amount necessary for analysis is different depending on a quantitative analysis method.

At step S103, a sampling amount necessary for a selected quantitative analysis method is determined. Herein, a necessary sampling amount may preliminarily be caused to correspond thereto and stored in a database for each analysis method. In this case, a sampling amount necessary for a selected analysis method is selected with reference to a database.

At step S104, the sampling tool 20 or the sampler 21 suitable for acquiring a necessary sampling amount is determined with reference to a sampler database.

At S105, the weight of the selected sampling tool 20 or sampler 21 is measured prior sampling. The weight of each sampling tool 20 or sampler 21 may preliminarily be measured and stored in a database. The weight of the sampling tool 20 or sampler 21 is measured by, for example, a microbalance (micro-balance) method.

At step S106, a chemical conversion coating (a chromate film in this example) is sampled from a sample by using the selected sampling tool 20. The sampling surface 24 of the sampling tool 20 is pressed against a sample surface and scans, for example, an area of 2 cm × 2 cm so that it is possible to attach only a chemical conversion coating to the contact surface 22 of the sampling jig 20.

As step S107, a weight of a sampling jig with a chemical conversion coating attaching thereto is measured by a microbalance method and a weight of a sampling jig as measured at S105 is subtracted therefrom to obtain a weight difference. This weight difference corresponds to a weight of a sampled chromate film.

At S108, a weight of Cr(VI) is quantified by a selected quantitative analysis method.

At S109, a concentration by weight of Cr(VI) is calculated. That is, a weight of Cr(VI) as obtained at S108 is divided by a weight of a chromate film as obtained at S107, and thereby, it is possible to obtain a concentration by weight (wt%) of hexavalent chromium in a coating.

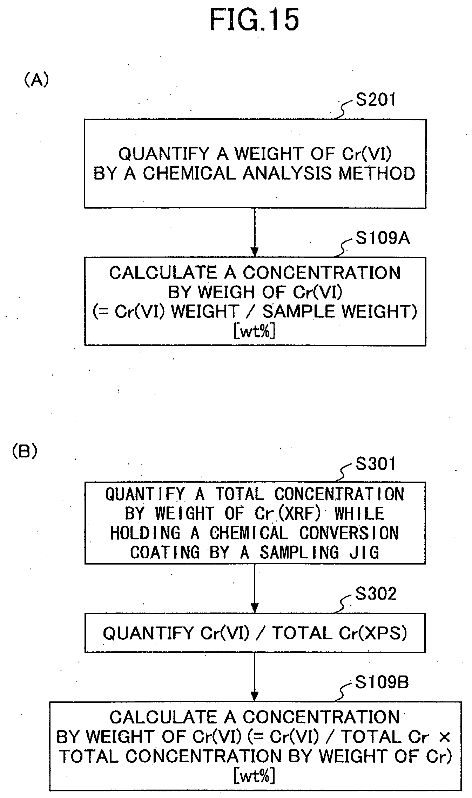

FIG. 15(A) illustrates a flow in a case where a chemical analysis method is used as a quantitative analysis method at S108 in FIG. 14. In this case, a weight of Cr(VI) is quantified at S201 in FIG. 15(A), subsequently to S107 in FIG. 14. For a chemical analysis method, it is possible to use an arbitrary technique such as a hot water elution or an alkali elution. The sampling tool 20 samples only a chromate film from a sample. Because the sampler 21 itself has a chemical resistance, it is possible to dissolve all of a sampled chromate film without causing a change of valence of Cr. Among components of a dissolved chromate film, hexavalent chromium Cr(VI) is caused to produce luminescence selectively with diphenylcarbazide, and absorbance is measured by using a commercially available spectrophotometer. Content of Cr(VI) (µg) is proportional to absorbance. Therefore, it is possible to obtain a weight of dissolved Cr(VI) from a measured absorbance by using a calibration curve that is prepared by preliminarily measuring a sample with a known content of Cr(VI).

Then, at S109A subsequent to S201, a concentration by weight of Cr(VI) in a chemical conversion coating is calculated. That is, a concentration by weight of Cr(VI) is calculated from a weight of hexavalent chromium (Cr(VI)) as obtained at step S201 and an amount of a sample as obtained at S105.

It is possible for this method to quantify concentration by weight of a particular component in a sampled coating as a simple method.

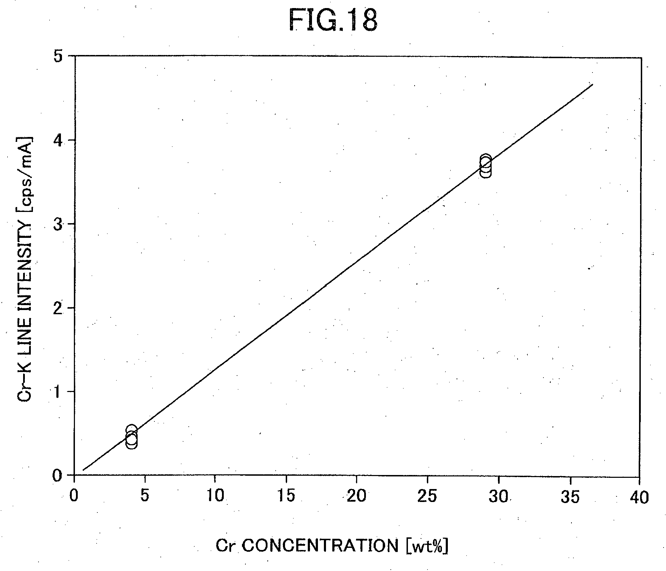

FIG. 15(B) illustrates a flow in a case where an X-ray fluorescence (XRF) analysis method and an X-ray photoelectron spectroscopic (XPS) analysis method are used in combination as a quantitative analysis method at S108 in FIG. 14. In this case, quantification of total Cr is executed at S301 in FIG. 15(B) subsequently to S107 in FIG. 14. A chromate film is held on a condition that it is attached to the sampling tool 20 and a surface of the chromate film is irradiated with X-rays, wherein an intensity of X-ray fluorescence (Cr-Kα line) emitted from Cr is measured to execute quantification of total chromium. Because a total weight of chromium is proportional to an intensity of the Cr-Kα line, a total concentration by weight of Cr [wt%] is obtained from a measured intensity by using a preliminarily prepared calibration curve (see FIG. 18). Because the sampling tool 20 or the sampler 21 is selected so that a surface area of the sampling surface 24 is present within a range of a measurement area of an X-ray fluorescence measurement device, it is possible to obtain a total weight of Cr contained in a sampled chromate film directly and accurately. Herein, quantification of a calibration curve by XRF may be executed for a total weight of Cr or total concentration by weight of Cr. In a case where a total weight of Cr is quantified, it is possible to calculate a total concentration by weigh of Cr by dividing an obtained total weight of Cr by a weight of a chromate film as measured at S107 in FIG. 14.

Then, at S302 subsequent to S301, a ratio of trivalent chromium Cr(III) and hexavalent chromium Cr(VI) is investigated by X-ray photoelectron spectroscopic (XPS) analysis and a ratio (Cr(VI) / total Cr) of hexavalent chromium to a total of chromium (Cr(III) + Cr(VI)) is obtained. It is possible to obtain Cr(VI) / total Cr by a publicly known X-ray photoelectron spectroscopic (XPS) analysis method. For example, hexavalent chromium that is eluted with hot water or eluted with an alkali from a sampled sample is caused to produce luminescence selectively with diphenylcarbazide and absorbance is measured by using a commercially available spectrophotometer so that a ratio of trivalent chromium and hexavalent chromium is determined. Cr(VI) / total Cr is calculated from a determined ratio.

At S109B, a concentration by weight of Cr(VI) in a chemical conversion coating is calculated. That is, a weight or concentration by weight of Cr(VI) contained in a chemical conversion coating is obtained based on a total weight or concentration by weight of Cr as obtained at step S301 and a ratio of Cr(VI) / total Cr as obtained at step S302. In a case where a total weight of Cr is quantified at S301, a weight of Cr(VI) as obtained from a ratio at S302 is divided by a weight of a sampled chromate film. In a case where a total concentration by weight of Cr is quantified at S301, a concentration by weight of Cr(VI) is directly calculated based on a ratio at S302.

According to this method, it is possible to determine a concentration by weight of Cr(VI) in a chemical conversion coating as a simple technique and it is possible to readily determine whether or not an electronic component complies with the EU-RoHS standard. It is possible to sample an arbitrary coating and quantify a concentration by weight of an element in the coating as well as an element regulated by the EU-RoHS.

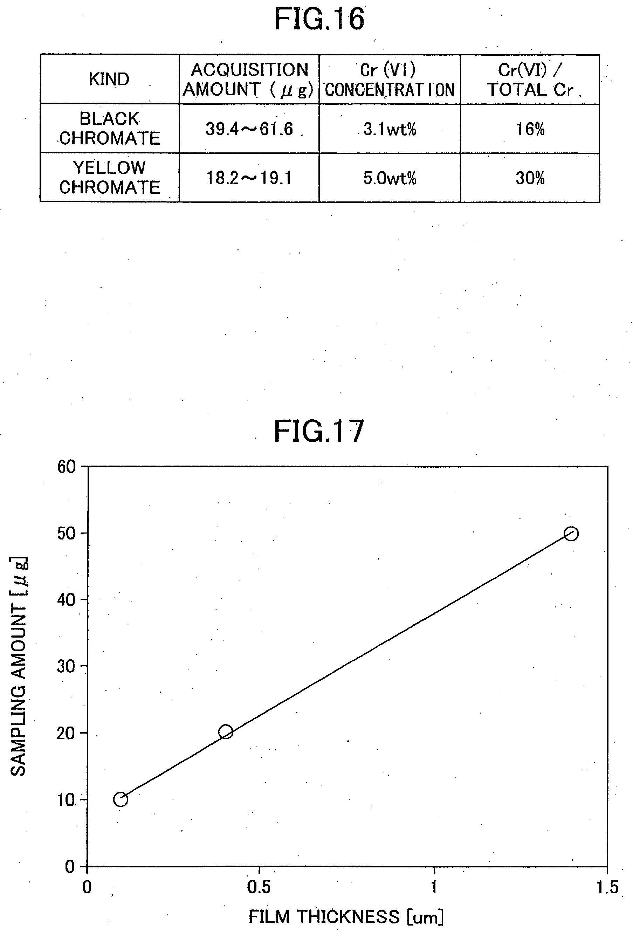

FIG. 16 is a table that illustrates a measurement result of a sampling amount (acquisition amount) and a concentration by weight of Cr(VI) and a Cr(VI) / total Cr in a case where a black chromate and a yellow chromate were practically sampled and analyzed by using the sampling tool 20 (with a diameter of 5 mm, a curvature of SR 35, and a surface roughness of 0.5 µm) in an embodiment.

A sample was prepared by coating an iron plate with a zinc plating applied thereto with each of two kinds of chromate films (a black chromate film and a yellow chromate film). A surface area of a top surface of the sample was 5 cm × 5 cm and a thickness of an iron substrate was 1 mm, while a thickness of a zinc plating film was 3 µm and a film thickness of the chromate film was 1 µm.

Sampling and measurement were executed three times for each of the black chromate film and the yellow chromate film. A sampling amount of the black chromate film (an amount for attachment to the sampling surface 24) was within a range of 39.4 - 61.1 µg and an average weight thereof was 52.5 µg. As a result of obtaining a concentration of Cr(VI) for each sample, an average concentration by weight thereof was 3.1 wt%. A proportion of Cr(VI) to total Cr was 16%.

Similarly, a sampling weight of the yellow chromate film (an amount for attachment to the sampling surface 24) was within a range of 18.2 - 19.1 µg and an average weight thereof was 18.7 µg. As a result of obtaining a concentration of Cr(VI) for each sample, an average concentration by weight thereof was 5.0 wt%. A proportion of Cr(VI) to total Cr was 30%.

Because published values of Cr(VI) / total Cr with respect to a general black chromate film and yellow chromate film are 15% and 20 - 30%, respectively, it is found that a quantification method in an embodiment has high precision.

FIG. 17 is a graph that illustrates a relationship between a film thickness of chemical conversion coating and a sampling weight. While ten of each of three kinds of samples were prepared wherein film thicknesses of chromate films were 0.1 µm, 0.4 µm, and 1.4 µm, a chromate film was sampled from each sample by using the sampling tool 20 and a sampling amount thereof was measured. An average sampling amount for ten-times sampling with respect to each film thickness was obtained and plotted as a function of the film thickness.

As is clear from FIG. 17, it is found that a weight of a chromate film to be sampled and a film thickness of the chromate film has a linear relationship. This result is also a basis for indicating that a chromate film is separated from an interface of an underlying plating layer.

FIG. 18 is a graph (a calibration curve) provided by preparing a plurality of each of two kinds of samples having different Cr concentrations and plotting a relationship between a total concentration of Cr contained in the samples (wt%) and an intensity of Cr-Kα line in XRF. A quantification value at S301 in FIG. 15(B) is used as a total concentration of Cr (wt%). A content of hexavalent chromium Cr(VI) may be obtained at S302 when a concentration by weight in a case where a total amount of chromium is quantified by using this XRF calibration curve is greater than or equal to a predetermined value, that is, an intensity of a measured Cr-Kα line is greater than or equal to a predetermined value. That is because it is considered that content of hexavalent chromium is also small in a case where a total amount of chromium in a sampled chemical conversion coating is small. For one example, going to step S302 for detecting hexavalent chromium may be executed in a case where a total concentration of detected chromium is greater than or equal to 1.0 wt%.

### <A configuration of a sampling jig>

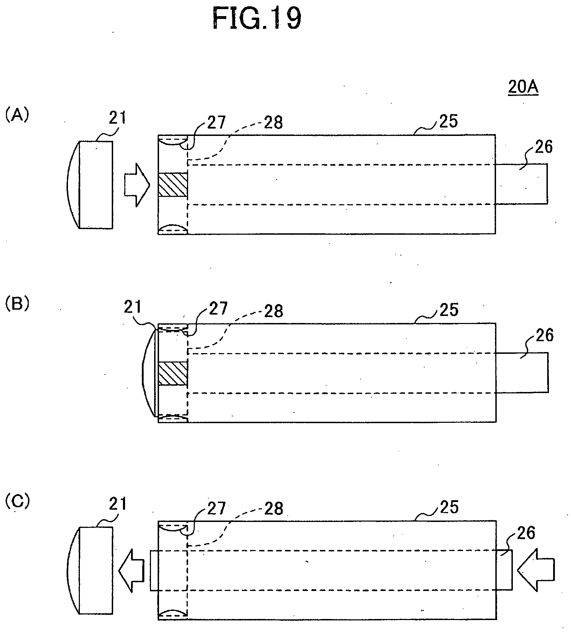

FIG. 19 is a configuration example of a sampling tool 20A. In a case where a difference between a weight before sampling and a weight after sampling is obtained to obtain a weight of a sampled chromate film at step S107 in FIG. 14, it is desirable to measure a weight difference by a single sampler 21 in order to improve measurement precision. Furthermore, in a case where curvature or surface roughness of the sampler 21 is selected depending on a needed sampling amount, it is desirable for the sampler 21 to be replaceable. Then, the sampler 21 is detachable from a holder 25.

As illustrated in FIG. 19(A) and FIG. 19(B), a base of the sampler 21 is inserted into the holder 25 and fixed by a plate spring 27. After sampling, a rod 26 is pushed to remove the holder 25 from the sampler 21.

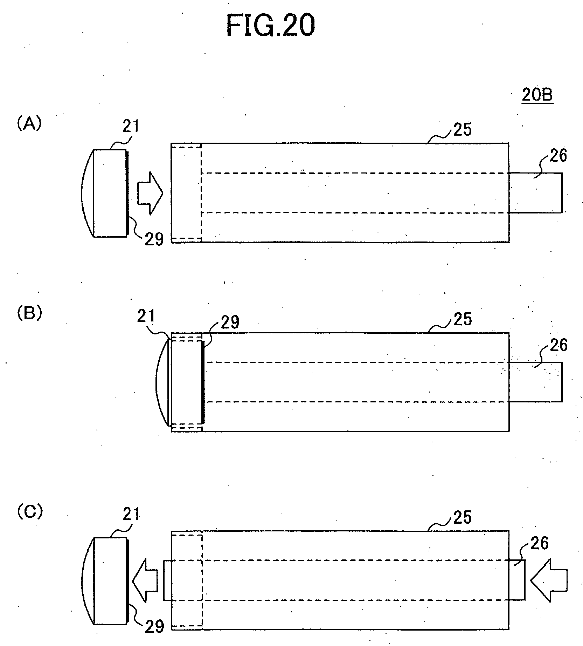

FIG. 20 is a configuration example of a sampling tool 20B. The sampling jig 20B is such that an adhesive 29 is applied on a portion of a side surface of a sampler 21 to be fixed in a holder 25. In this case, materials of the holder 25 and the adhesive 29 are selected in such a manner that adhesive strength of the adhesive 29 for the sampler 21 is greater than adhesive strength of the adhesive 29 for the holder 25. Similarly to FIG. 19, a rod 26 is pushed after sampling so that it is possible to remove the sampler 21 from the holder 21.

As described above, it is possible to sample a coating as a target from a sample effectively by using a sampling jig in an embodiment. Furthermore, it is possible to quantify concentration by weight of a substance contained in a coating by a simple technique.

Furthermore, it is possible to select an optimum sampler 21 with a parameter such as curvature, surface roughness, or surface area of a sampling surface, that is different depending on a sampling amount necessary for analysis, a spot size of an X-ray fluorescence measurement device, or the like. It is possible to apply a sampling jig and a quantitative measurement method in an embodiment to measurement of a concentration by weight of an element contained in an arbitrary chemical conversion coating as well as concentration by weight of Cr(VI) in a chromate film.

### EXPLANATION OF LETTERS OR NUMERALS

10 ... sample
11 ... substrate
12 ... plating film.
13 ... chemical conversion coating or chromate film (coating)
20 ... sampling tool
21 ... sampler
22 ... contact surface
23 ... recess
24 ... sampling surface
25 ... holder (holding part)

## Claims

1. A sampling tool (20) for sampling a coating (13) formed on either a substrate (11) or an underlying plating film (12), wherein the sampling tool (20) comprises:
a sampler (21) that has a convex sampling surface with a predetermined curvature, wherein
the sampling surface has a contact surface (22) that contacts the coating (13) to hold a sampled coating (13) **characterised in that** the sampling surface has a recess (23) formed on the contact surface (22); and
the surface area of the contact surface is greater than the surface area of the recess (23).

2. The sampling tool (20) as claimed in claim 1, **characterized in that** a hydrophilic treatment has been applied to the sampling surface.

3. The sampling tool (20) as claimed in claim 1, **characterized in that** a surface modification treatment that improves an adhesion force has been applied to the sampling surface.

4. The sampling tool (20) as claimed in claim 1, **characterized in that** the recess (23) of the sampling surface is a dent formed on the contact surface (22) randomly.

5. The sampling tool (20) as claimed in claim 1, **characterized in that** the recess (23) of the sampling surface is a groove formed on the contact surface (22).

6. The sampling tool (20) as claimed in claim 1, **characterized by** further comprising:
a holding part that holds the sampler (21), and preferably wherein the sampler (21) is detachable from the holding part.

7. The sampling tool (20) as claimed in claim 1, **characterized in that** the predetermined curvature is SR 5 mm - SR 50 mm.

8. A quantitative analysis method **characterized by**:
preparing a sampler (21) according to claim 1; and sampling a coating (13) either on a substrate (11) or an underlying plating film (12).

9. The quantitative analysis method as claimed in claim 8, comprising;
storing in a database the correspondence between a sampling amount and at least one of a curvature and a surface roughness of the sampling surface, a surface area of the sampling surface, and a hardness of the sampler (21);
determining a sampling amount necessary for an intended quantitative analysis;
selecting a sampler (21) depending on the sampling amount with reference to the database; and
sampling a coating (13) on a substrate (11) by using the selected sampler (21).

10. The quantitative analysis method as claimed in claim 8 or 9 further comprising:
calculating a weight of the sampled coating (13) from a difference between a pre-sampling weight and a post-sampling weight of the sampler (21); and
quantifying a concentration by weight of a particular substance contained in the coating (13) based on the weight of the sampled coating (13).

11. The quantitative analysis method as claimed in claim 10, further comprising:
the coating (13) is a chemical conversion coating on a metal substrate (11); and
the quantifying is such that a weight of the particular substance in the coating is determined by a chemical analysis method and a concentration by weight of the particular substance contained in the coating is calculated in such a way that the weight of the particular substance is divided by a weight of the sampled chemical conversion coating.

12. The quantitative analysis method as claimed in claim 10, further comprising:
the coating (13) is a chromate film on a metal substrate (11); and
the quantifying is such that a total weight or concentration by weight of chromium in the chromate film is quantified by a fluorescent radiation analysis on a condition that the sampled chemical conversion coating is held by the sampler (21) and subsequently a concentration by weight of a hexavalent chromium is quantified by a chemical analysis method.

13. The quantitative analysis method as claimed in claim 12, further comprising a concentration by weight of the hexavalent chromium is quantified in a case where the total weight of chromium is greater than or equal to a predetermined value.

14. An analysis system, comprising:
the sampling tool (20) as claimed in any one of claims 1 - 2;
a weighing instrument that measures a weight of a coating (13) sampled by the sampling tool (20); and
an optical measuring device that screens a particular substance contained in the sampled coating (13).

## Patentansprüche

1. Probenentnahmegerät (20) zur Probenentnahme aus einer Beschichtung (13), die entweder auf einem Substrat (11) oder einem darunterliegenden Plattierfilm (12) gebildet ist, wobei das Probenentnahmegerät (20) Folgendes umfasst:
einen Probenentnehmer (21), der eine konvexe Probenentnahmefläche mit einer vorgegebenen Krümmung aufweist,
wobei die Probenentnahmefläche eine Kontaktfläche (22) aufweist, die mit der Beschichtung (13) in Kontakt kommt, um eine zur Probe entnommene Beschichtung (13) zu halten, **dadurch gekennzeichnet, dass** die Probenentnahmefläche eine Ausnehmung (23) aufweist, die auf der Kontaktfläche (22) gebildet ist; und
wobei der Oberflächenbereich der Kontaktfläche (22) größer ist als der Oberflächenbereich der Ausnehmung (23).

2. Probenentnahmegerät (20) nach Anspruch 1, **dadurch gekennzeichnet, dass** die Probenentnahmefläche einer hydrophilen Behandlung unterzogen wurde.

3. Probenentnahmegerät (20) nach Anspruch 1, **dadurch gekennzeichnet, dass** die Probenentnahmefläche einer Oberflächenveränderungsbehandlung, die eine Haftfestigkeit verbessert, unterzogen wurde.

4. Probenentnahmegerät (20) nach Anspruch 1, **dadurch gekennzeichnet, dass** es sich bei der Ausnehmung (23) der Probenentnahmefläche um eine willkürlich auf der Kontaktfläche (22) gebildete Ausbuchtung handelt.

5. Probenentnahmevorrichtung (20) nach Anspruch 1, **dadurch gekennzeichnet, dass** es sich bei der Ausnehmung (23) der Probenentnahmefläche um eine auf der Kontaktfläche (22) gebildete Rille handelt.

6. Probenentnahmegerät (20) nach Anspruch 1, **dadurch gekennzeichnet, dass** es ferner Folgendes umfasst:
einen Halteteil, der den Probenentnehmer (21) hält, und wobei vorzugsweise der Probenentnehmer (21) von dem Halteteil lösbar ist.

7. Probenentnahmegerät (20) nach Anspruch 1, **dadurch gekennzeichnet, dass** die vorgegebene Krümmung SR 5mm -SR 50 mm beträgt.

8. Quantitatives Analyseverfahren, das durch Folgendes gekennzeichnet ist:
Herstellen eines Probenentnehmers (21) gemäß Anspruch 1; und Probenentnahme aus einer Beschichtung (13) entweder auf einem Substrat (11) oder einem darunterliegenden Plattierfilm (12).

9. Quantitatives Anafyseverfahren nach Anspruch 8, das Folgendes umfasst:
Speichern, in einer Datenbank, der Entsprechung zwischen einer Probenentnahmemenge und/oder einer Krümmung und/oder einer Oberflächenrauheit der Probenentnahmefläche und/oder einem Oberflächenbereich der Probenentnahmefläche und/oder einer Härte des Probenentnehmers (21);
Bestimmen einer Probenentnahmemenge, die für eine gewünschte quantitative Analyse erforderlich ist;
Auswählen eines Probenentnehmers (21) je nach der Probenentnahmemenge in Bezug auf die Datenbank; und
Probenentnahme aus einer Beschichtung (13) auf einem Substrat (11) unter Verwendung des ausgewählten Probenentnehmers (21).

10. Quantitatives Analyseverfahren nach Anspruch 8 oder 9, das ferner Folgendes umfasst:
Berechnen eines Gewichts der zur Probe entnommenen Beschichtung (13) aus einer Differenz zwischen einem Gewicht des Probenentnehmers (21) vor der Probenentnahme und einem Gewicht des Probenentnehmers (21) nach der Probenentnahme; und
Quantifizieren einer Gewichtskonzentration einer bestimmten Substanz, die in der Beschichtung (13) enthalten ist, basierend auf dem Gewicht der zur Probe entnommenen Beschichtung **(13).**

11. Quantitatives Analyseverfahren nach Anspruch 10, das ferner Folgendes umfasst:
die Beschichtung (13) ist eine chemische Umwandlungsbeschichtung auf einem Metallsubstrat (11); und
die Quantifizierung ist derart, dass ein Gewicht der bestimmten Substanz in der Beschichtung durch ein chemisches Analyseverfahren bestimmt wird und eine Gewichtskonzentration der in der Beschichtung enthaltenen bestimmten Substanz wird derart berechnet, dass das Gewicht der bestimmten Substanz durch ein Gewicht der zur Probe entnommenen chemischen Umwandlungsbeschichtung geteilt wird.

12. Quantitatives Analyseverfahren nach Anspruch 10, das ferner Folgendes umfasst:
die Beschichtung (13) ist ein Chromatfilm auf einem Metallsubstrat (11); und
die Quantifizierung ist derart, dass ein Gesamtgewicht oder eine Gewichtskonzentration von Chrom in dem Chromatfilm durch Fluoreszenzstrahlenanalyse quantifiziert wird, unter der Voraussetzung, dass die zur Probe entnommene chemische Umwandlungsbeschichtung von dem **Probenentnehmer** (21) gehalten wird, und anschließend wird eine Gewichtskonzentration von Chrom VI durch ein chemisches Analyseverfahren quantifiziert.

13. Quantitatives Analyseverfahren nach Anspruch 12, das ferner umfasst, dass eine Gewichtskonzentration von Chrom VI quantifiziert wird, wenn das Gesamtgewicht von Chrom größer als oder gleich einem vorgegebenen Wert ist.

14. Analysesystem, das Folgendes umfasst:
das Probenentnahmegerät (20) nach einem der Ansprüche 1-2;
ein Wägegerät, das ein Gewicht einer Beschichtung (13), die von dem Probenentnahmegerät (20) zur Probe entnommen wird, wiegt; und
eine optische Messvorrichtung, die eine in der zur Probe entnommenen Beschichtung (13) enthaltene bestimmte Substanz prüft.

## Revendications

1. Outil d'échantillonnage (20) pour échantillonner un revêtement (13) formé sur un substrat (11) ou un film de placage sous-jacent (12), dans lequel l'outil d'échantillonnage (20) comprend :
un échantillonneur (21) qui a une surface d'échantillonnage convexe ayant une courbure prédéterminée, dans lequel
la surface d'échantillonnage a une surface de contact (22) qui vient en contact avec le revêtement (13) pour maintenir un revêtement échantillonné (13), **caractérisé en ce que** la surface d'échantillonnage a un évidement (23) formé sur la surface de contact (22) ; et
la surface superficielle de la surface de contact (22) est supérieure à la surface superficielle de l'évidement (23).

2. Outil d'échantillonnage (20) selon la revendication 1, **caractérisé en ce qu'**un traitement hydrophile a été appliqué à la surface d'échantillonnage.

3. Outil d'échantillonnage (20) selon la revendication 1, **caractérisé en ce qu'**un traitement de modification de surface qui améliore une force d'adhérence a été appliqué à la surface d'échantillonnage.

4. Outil d'échantillonnage (20) selon la revendication 1, **caractérisé en ce que** l'évidement (23) de la surface d'échantillonnage est un cran formé sur la surface de contact (22) de manière aléatoire.

5. Outil d'échantillonnage (20) selon la revendication 1, **caractérisé en ce que** l'évidement (23) de la surface d'échantillonnage est une rainure formée sur la surface de contact (22).

6. Outil d'échantillonnage (20) selon la revendication 1, **caractérisé en ce qu'**il comprend en outre :
une partie de maintien qui maintient l'échantillonneur (21), et dans lequel de préférence l'échantillonneur (21) peut être détaché de la partie de maintien.

7. Outil d'échantillonnage (20) selon la revendication 1, caractérisé en ce la courbure prédéterminée est SR 5 mm - SR 50 mm.

8. Procédé d'analyse quantitative, **caractérisé par** les étapes consistant à :
préparer un échantillonneur (21) selon la revendication 1, et échantillonner un revêtement (13) sur un substrat (11) ou un film de placage sous-jacent (12).

9. Procédé d'analyse quantitative selon la revendication 8, comprenant les étapes consistant à :
stockées dans une base de données la correspondance entre une quantité d'échantillonnage et au moins une parmi une courbure et une rugosité de surface de la surface d'échantillonnage, une surface superficielle de la surface d'échantillonnage, et une dureté de l'échantillonneur (21) ;
déterminer une quantité d'échantillonnage nécessaire pour une analyse quantitative prévue ;
sélectionner un échantillonneur (21) selon la quantité d'échantillonnage en faisant référence à la base de données ; et
détecté un revêtement (13) sur un substrat (11) en utilisant l'échantillonneur sélectionné (21).

10. Procédé d'analyse quantitative selon la revendication 8 ou 9, comprenant en outre les étapes consistant à :
calculer un poids du revêtement échantillonné (13) à partir d'une différence entre un poids de pré-échantillonnage et un poids de post-échantillonnage de l'échantillonneur (21) ; et
quantifier une concentration en poids d'une substance particulière contenue dans le revêtement (13) sur la base du poids du revêtement échantillonné (13).

11. Procédé d'analyse quantitative selon la revendication 10, comprenant en outre :
le revêtement (13) est un revêtement de conversion chimique sur un substrat métallique (11) ; et
la quantification est telle qu'un poids de la substance particulière dans le revêtement est déterminé par un procédé d'analyse chimique et une concentration en poids de la substance particulière contenue dans le revêtement est calculée d'une manière telle que le poids de la substance particulière est divisé par un poids du revêtement de conversion chimique échantillonné.

12. Procédé d'analyse quantitative selon la revendication 10, comprenant en outre :
le revêtement (13) est un film de chromate sur un substrat métallique (11) ; et
la quantification est telle qu'un poids total ou une concentration en poids de chrome dans le film de chromate est quantifié(e) par une analyse par rayonnement fluorescent dans un état où le revêtement du conversion chimique échantillonné est maintenu par l'échantillonneur (21), et ensuite une concentration en poids d'un chrome hexavalent est quantifiée par un procédé d'analyse chimique.

13. Procédé d'analyse quantitative selon la revendication 12, comprenant en outre une concentration en poids du chrome hexavalent qui est quantifiée dans un cas dans lequel le poids total du chrome est supérieur ou égal à une valeur prédéterminée.

14. Système d'analyse, comprenant :
l'outil d'échantillonnage (20) selon la revendication 1 ou 2 ;
un instrument de pesage qui mesure un poids d'un revêtement (13) échantillonné par l'outil d'échantillonnage (20) ; et
un dispositif de mesure optique qui crible une substance particulière contenue dans le revêtement échantillonné (13).
